# EUROPÄISCHE PATENTSCHRIFT

(11) **EP 1 475 991 B1**
(45) Veröffentlichungstag und Bekanntmachung des Hinweises auf die Patenterteilung: **03.12.2008**
(21) Anmeldenummer: 04101949.8
(22) Anmeldetag: 06.05.2004
(51) Int. Cl.: H04R 5/02

(54) **Funkgerät**
Radio device
Dispositif radio

(30) Priorität: 09.05.2003 DE 20307322 U
(43) Veröffentlichungstag der Anmeldung: 10.11.2004
(73) Patentinhaber: stabo Elektronik GmbH, 31137 Hildesheim (DE)
(72) Erfinder: Bormann, Helmuth, 31141 Hildesheim (DE)
(74) Vertreter: Eisenführ, Speiser & Partner

(56) Entgegenhaltungen:
- DE-A1- 19 746 161
- JP-A- 1 113 988
- JP-A- 2004 015 149
- US-A- 2 137 035
- US-A- 4 846 382
- US-A- 5 864 627

## Beschreibung

Die Erfindung betrifft ein Funkgerät zum liegenden Einbau in einen Norm-Schacht eines Kraftfahrzeugs, mit einem in das Funkgerät eingebauten Lautsprecher, dessen Öffnung parallel zur Ober- oder Unterseite des Funkgeräts verläuft und mit einer Frontplatte, auf der Bedienungselemente angeordnet sind und die eine Schallaustrittsöffnung aufweist.

Funkgestützte Kommunikationsmittel werden häufig für die mobile Kommunikation genutzt. Unter diesen Kommunikationsmitteln sind beispielsweise Autoradios und Funkgeräte zu verstehen. Um diese Geräte in Fahrzeugen zu installieren, werden von den Fahrzeugherstellern Norm-Schächte vorgesehen. Diese sind oft in die Mittelkonsole oder über ihr in die Fahrzeugdecke eingelassen. Unter einem Norm-Schacht werden neben Norm-Schächten nach ISO 7736 beispielsweise auch Norm-Schächte nach internen Normen der Automobilhersteller verstanden.

Wenn ein derartiges Kommunikationsmittel in einem Norm-Schacht installiert ist, so ist es an fünf seiner Seiten von dem Norm-Schacht umgeben. Nur die Frontseite bleibt dem Bediener zugänglich. Auf dieser Seite befinden sich die Bedienelemente des Gerätes.

In Nutzfahrzeugen wird neben einem Norm-Schacht für ein Autoradio oft ein weiterer Norm-Schacht zur Aufnahme eines Funkgerätes vorgesehen. Derartige Funkgeräte sind meist quaderförmig gestaltet und verfügen über einen eingebauten Lautsprecher in ihrer Ober- oder Unterwand, die zugleich die beiden größten Flächen des Gerätes darstellen. Heutige Funkgeräte sind oft kleiner als es der Norm-Schacht erfordert. In diesem Fall weisen die Funkgeräte einen zusätzlichen Einbaurahmen auf, der seinerseits in den Norm-Schacht passt. Das Funkgerät besteht in diesem Fall aus dem eigentlichen kleinen Sendeempfänger und dem diesen aufnehmenden Einbaurahmen.

Es bestehen verschiedene Möglichkeiten, die Tonsignale eines Funkgerätes mit Lautsprechern hörbar zu machen. Im Falle von Autoradios verwendet man normalerweise externe Lautsprecher, die im Fahrzeug verteilt angeordnet und verkleidet sind, wie die Druckschrift US 5 864 627 zeigt. Im Falle von Funkgeräten wird gern der in diese eingebaute Lautsprecher benutzt. Dies ist jedoch dann nicht möglich, wenn das Funkgerät den erwähnten Einbaurahmen aufweist und in einem Norm-Schacht untergebracht ist, weil die abgestrahlte Schallenergie des eingebauten Lautsprechers dann hinter der Wandung beispielsweise des Armaturenbrettes gefangen ist. Um hier Abhilfe zu schaffen, hat man an den neben dem eingebauten Lautsprecher zusätzlich vorhandenen Tonausgang des Funkgerätes einen Zusatz- Lautsprecher angeschlossen und im Einbaurahmen auf dessen Frontseite weisend untergebracht.

Der Zusatz- Lautsprecher im Einbaurahmen kann aus Platzgründen allerdings nur einen sehr kleinen Durchmesser haben. So ist ein solcher kleiner Zusatz- Lautsprecher anfällig gegen Beschädigungen durch Überlastung. Sehr unangenehm ist auch, dass ein derartig kleiner Zusatz-Lautsprecher nur einen sehr beschränkten Frequenzgang hat und insbesondere tiefe Frequenzen schlecht übertragen kann, sodass die Verständlichkeit einerseits wegen zu geringer Ausgangsleistung des Zusatz- Lautsprechers und andererseits wegen des begrenzten Frequenzganges schlecht ist.

Es ist daher Aufgabe der vorliegenden Erfindung, ein in einen Norm-Schacht eines Kraftfahrzeuges einsetzbares Funkgerät vorzuschlagen, das eine kostengünstige, nach Leistung und Frequenzgang verbesserte Schallabstrahlung hat.

Diese Aufgabe wird dadurch gelöst, dass ein Kanal zur Schallleitung vom Lautsprecher zur Frontseite des Funkgeräts ausgebildet ist, der mindestens in seinem dem Lautsprecher benachbarten Teil parallel zur Ober- oder Unterseite des Funkgeräts verläuft und in der Schallaustrittsöffnung endet.

Es hat sich nämlich herausgestellt, dass das angestrebte Ziel mit überraschend einfachen Mitteln erreichbar ist. Kern der Erfindung ist die Abkehr von dem Zusatz- Lautsprecher und die Weiterverwendung des eingebauten Lautsprechers des Funkgerätes auch in den Fällen, wo das Funkgerät mit dem erwähnten Einbaurahmen versehen ist. Gemäß der Erfindung ist hierzu ein Kanal zur Schalleitung im Funkgerät ausgebildet, der von dem eingebauten Lautsprecher des Funkgerätes zur Frontseite des Gerätes führt und den Schall von dieser Frontseite aus in den Raum abgibt.

Vorteilhafte Ausgestaltungen der Erfindung sind in den Unteransprüchen angegeben. Nachstehend ist die Erfindung anhand eines bevorzugten Ausführungsbeispiels, nämlich eines mit Einbaurahmen versehenen Funkgerätes dargestellt und beschrieben; gleichwohl ist die Erfindung aber für alle vergleichbaren Geräte verwendbar, die in einem Norm-Schacht untergebracht werden sollen und einen eigenen Lautsprecher aufweisen, der bei Einbau in einen Norm-Schacht hinter der Fahrzeugverkleidung abstrahlt.

### Beschreibung der Zeichnungen

Im Folgenden wird eine bevorzugte Ausführungsform der Erfindung näher beschrieben. In den Zeichnungen zeigt
- Fig. 1: eine perspektivische Frontalansicht eines Funkgeräts, das aus einem Sendeempfänger und einem Einbaurahmen besteht,
- Fig. 2: eine der Fig. 1 entsprechende Ansicht eines Einbaurahmens eines erfindungsgemäßen Funkgeräts ohne Sendeempfänger und
- Fig. 3: eine perspektivische Ansicht schräg von der Seite eines Einbaurahmens ohne Sendeempfänger.

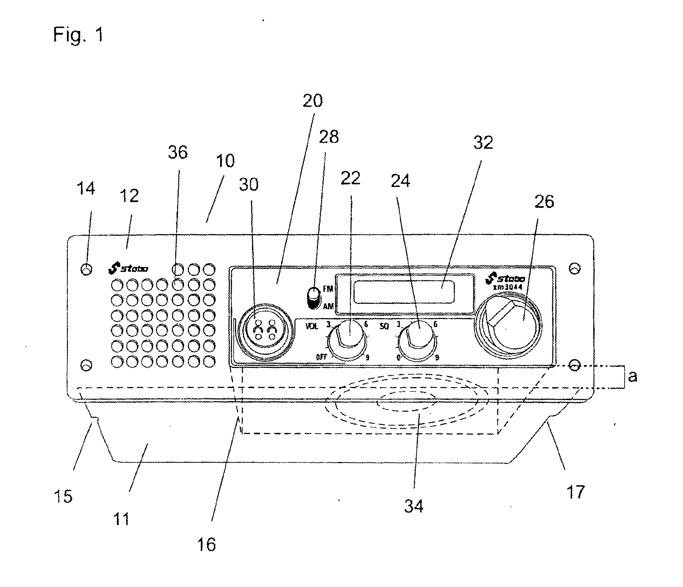

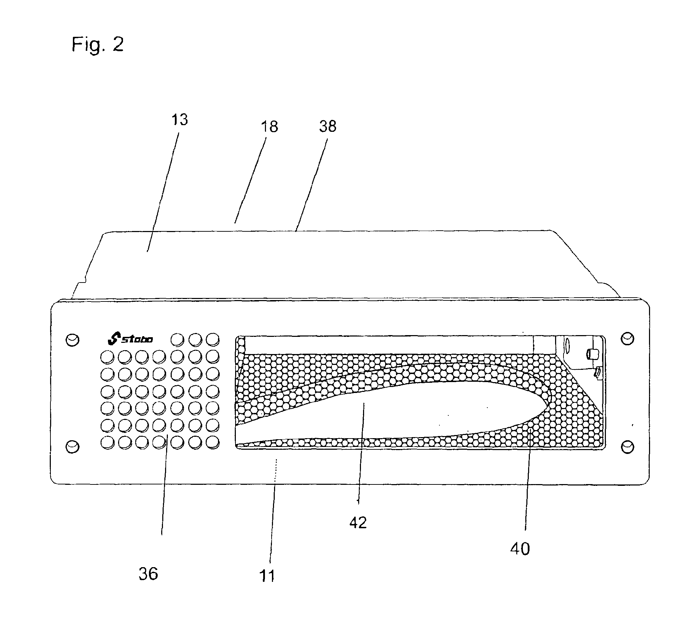

Ein Funkgerät 10 weist gemäß Fig. 1 eine Unterwand 11, eine Oberwand 13 (Fig. 2), eine Frontplatte 12, eine linke Wand 15 und eine rechte Wand 17 auf. Im Weiteren werden die Begriffe oben, unten, links, rechts, vorn und hinten für das Funkgerät gemäß der Ansicht nach Fig. 1 verwendet.

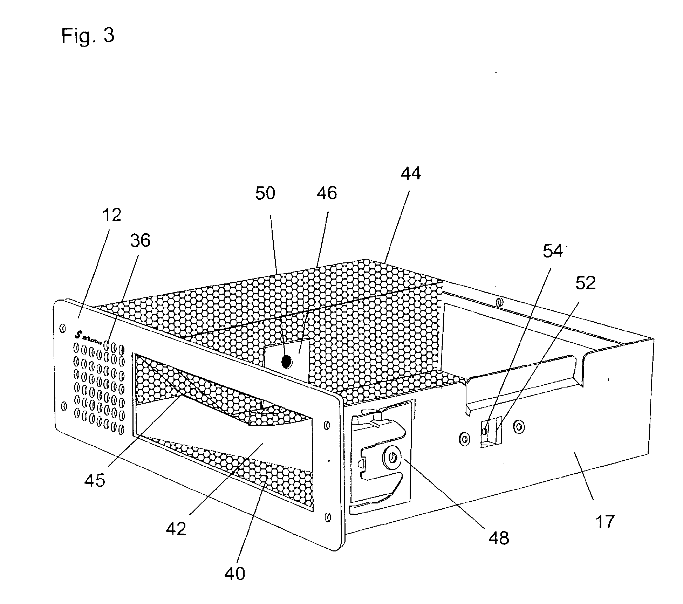

Nach Installation des Funkgerätes in einem Norm-Schacht, der meist in der Mittelkonsole von Fahrzeugen u.a. zur Aufnahme von Autoradios vorgesehen ist, ist für den Bediener lediglich die Frontplatte 12 sichtbar und zugänglich. An der linken Wand 15 und der rechten Wand 17 des Funkgeräts befinden Federelemente 48 (Fig. 3), die dazu dienen, das Funkgerät im Norm-Schacht zu arretieren.

In den Ecken der Frontplatte 12 befindet sich je ein Loch 14. Zur Entnahme des Funkgeräts 10 aus dem Norm-Schacht wird ein hier nicht gezeigtes Spezialwerkzeug verwendet, das durch die Löcher 14 gesteckt wird und die Federelemente 48 (Fig. 3) aus ihrer Arretierposition bewegt. In der Frontplatte 12 befindet sich ein Lochfeld 36, hinter dem bei Funkgeräten nach dem Stand der Technik ein Zusatz- Lautsprecher eingebaut ist, der hier nicht eingezeichnet ist. Der von diesem Lautsprecher abgegebene Schall dringt dann durch das Lochfeld 36 nach außen.

Das dargestellte Funkgerät 10 besteht aus einem Sendeempfänger 16 mit einem Einbaurahmen 18 (Fig. 2), der den Sendeempfänger umgibt und den Einbau des relativ kleinen Sendeempfängers in den Norm-Schacht ermöglicht. Alternativ kann der Sendeempfänger 16 Abmaße haben, die es erlauben, ihn direkt in den Norm-Schacht einzusetzen. In diesem Fall befinden sich die im Folgenden beschriebenen Elemente innerhalb des Sendeempfängers.

Der in Fig. 2 gezeigte Einbaurahmen 18 weist ein Gehäuse 38 und eine Frontplatte 12 auf. Das Gehäuse 38 besteht aus Metall und ist quaderförmig ausgebildet, Oberwand 13 und Unterwand 11 sind seine größten Flächen. Die äußeren Abmaße des Gehäuses richten sich nach den Norm-Vorgaben für den entsprechenden Norm- Schacht.

Der Sendeempfänger 16 weist ebenfalls eine Ober- und eine Unterwand auf, die durch zwei Seitenwände, sowie eine Front- und eine Rückwand verbunden sind. Ober- und Unterwand stellen die beiden größten Flächen dar. Vom Sendeempfänger 16 ist, wenn er in den Einbaurahmen 18 eingeschoben ist, für den Bediener lediglich die Frontseite mit dem Bedienfeld 20 sichtbar. Auf dem Bedienfeld 20 sind ein Lautstärkeregelknopf 22, eine Rauschsperre 24, ein Kanalschalter 26 und ein Modulationstypumschalter 28 angeordnet. Eine Buchse 30 erlaubt den Anschluss eines externen Mikrofons, das hier nicht eingezeichnet ist. Über eine Anzeige 32 können dem Bediener Statusmitteilungen angezeigt werden. Auf seiner Unterseite verfügt der Sendeempfänger 16 über einen eingebauten Lautsprecher 34.

Wird der Sendeempfänger 16 in den Einbaurahmen 18 eingeschoben, so ist, wie Fig. 1 zeigt, die Unterwand des Sendeempfängers von der Unterwand des Einbaurahmens um den Abstand a beabstandet. Unterhalb der Stelle, an der sich der Lautsprecher 34 des in den Einbaurahmen eingeschobenen Sendeempfängers befindet, ist ein Kanal 42 ausgebildet (Fig. 2). Die untere Begrenzung des Kanals bildet die Unterwand 11 des Gehäuses 38. Seitlich ist der Kanal in drei Richtungen von den ihm zugewandten Wänden einer in einer Einlage 40 vorgesehenen Aussparung begrenzt. Die Einlage 40 hat eine flache, quaderförmige Außenkontur mit einer Ober- und einer Unterseite, sowie vier Schmalseiten. Sie ist so dimensioniert, dass sie mit ihren drei Schmalflächen an den jeweiligen Wänden des Gehäuses 38 und mit ihrer Unterfläche an der Unterwand des Gehäuses anliegt. Ihre Dicke ist gleich dem erwähnten Abstand a.

Die Aussparung durchsetzt die Einlage 40 vollständig und ihre Seitenflächen verlaufen senkrecht zur Unterseite der Einlage 40. Die Aussparung hat an der Stelle, die unterhalb des Lautsprechers des in den Einbaurahmen eingesetzten Sendeempfängers liegt, eine Ausdehnung, die etwa der des Lautsprechers entspricht. Die Aussparung läuft in Fig. 2 auf den linken Rand der Einlage 40 zu und trifft auf den Rand an der Ecke links vorne und an der Stelle, an der eine unten näher beschriebene keilförmige Aussparung 45 auf den Boden 11 des Gehäuses 38 trifft.

Als kostengünstige Werkstoffe für die Einlage 40, die einfache Herstellung und Bearbeitung erlauben, haben sich geschäumte Kunststoffe, insbesondere geschäumtes Polystyrol (z.B. Styropor® ) herausgestellt. Die Einlage 40 ist mit Klebstoff auf den Innenflächen des Gehäuses 38 fixiert. Alternativ kann der Kanal 42 beispielsweise auch durch Metall-, Papp- oder Kunststoffstreifen begrenzt sein.

An die Einlage 40 aus geschäumtem Kunststoff schließt sich gemäß Fig. 3 ein Formteil 44 an, das bevorzugterweise aus dem gleichen Material besteht wie die Einlage 40. Das Formteil 44 ist hinter dem Lochfeld 36 positioniert und hat im Wesentlichen die Form eines Quaders, der an fünf Seiten an den jeweiligen Innenseiten der Wände des Gehäuses 38 des Einbaurahmens anliegt. An der hinter dem Lochfeld 36 befindlichen Stelle des Formteils 44 befindet sich eine keilförmige Aussparung 45, die einen Raum hinter dem Lochfeld 36 eröffnet, sodass Schall aus diesem Raum durch das Lochfeld nach außen gelangen kann.

Die keilförmige Aussparung ist nach Fig. 1 an ihrer längsten, hinteren Seite und an ihrer linken Seite durch das Formteil 44 begrenzt, nach vorn durch das Lochfeld 36, nach unten durch die Unterwand 11 des Einbaurahmens und nach rechts durch die linke Wand des Sendeempfängers 16 begrenzt.

Der durch die keilförmige Aussparung 45 gebildete Raum ist eine Fortsetzung des Kanals 42. Damit kann Schall vom Lautsprecher 34 durch den Kanal 42, die Aussparung 45 und das Lochfeld 36 nach außen gelangen.

Das Formteil 44 ist durch eine Metalllasche 46 in seiner Position fixiert, die durch dreiseitiges Ausstanzen und Hochbiegen aus der Unterwand des Gehäuse 38 gebildet ist. Die Metalllasche 46 weist in der Mitte ein Loch 50 auf.

Zwischen Loch 50 und der linken Wand 15 befindet sich im Formteil 44 eine Bohrung größeren Durchmessers, die hier nicht gezeigt ist. An der Stelle, an der diese Bohrung auf die linke Wand 15 trifft befindet sich eine nicht eingezeichnete Bohrung in der linken Wand 15 mit einem Durchmesser, der dem der Bohrung im Formteil 44 entspricht. Durch die Löcher in der linken Wand 15 und dem Formteil 44 kann eine Schraube durch Loch 50 gesteckt werden, mit der der Sendeempfänger 16 fixiert wird.

In einer an der rechten Wand 17 angebrachten Metalllasche 52 ist eine weitere Bohrung 54 vorgesehen, durch die eine weitere Schraube gesteckt wird, die den Sendeempfänger 16 befestigt. Die Einlage 40 und das Formteil 44 dienen zusätzlich dem vibrationsfesten Fixieren des Sendeempfängers 16.

## Patentansprüche

1. Funkgerät zum liegenden Einbau in einen Norm-Schacht eines Kraftfahrzeugs, mit einem in das Funkgerät eingebauten Lautsprecher (34), dessen Öffnung parallel zur Ober- oder Unterseite des Funkgeräts verläuft und mit einer Frontplatte (12), auf der Bedienungselemente (22,24,26,28) angeordnet sind und die eine Schallaustrittsöffnung aufweist, **dadurch gekennzeichnet, dass** innerhalb des Funkgerätes ein Kanal (42) zur Schallleitung vom Lautsprecher (34) zur Frontseite (12) des Funkgeräts (10) ausgebildet ist, der mindestens in seinem dem Lautsprecher (34) benachbarten Teil parallel zur Ober- oder Unterseite des Funkgeräts verläuft und in der Schallaustrittsöffnung endet.

2. Funkgerät nach Anspruch 1, **dadurch gekennzeichnet, dass** der Kanal (42) zumindest teilweise in dem Zwischenraum zwischen dem Lautsprecher (34) und der Unterwand oder der Oberwand des Funkgeräts (10) verläuft.

3. Funkgerät nach Anspruch 2, **dadurch gekennzeichnet, dass** der Kanal (42) hinter der Schallauftrittsöffnung eine keilförmige Gestalt hat und in seinem dem Lautsprecher (34) benachbarten Teil und dem Teil zwischen diesen beiden Abschnitten einen rechteckigen Querschnitt aufweist und in seinem dem Lautsprecher (34) benachbarten Teil etwa die Ausdehnung des Lautsprecher (34) hat.

4. Funkgerät nach einem der vorstehenden Ansprüche, **dadurch gekennzeichnet, dass** der Kanal (42) zumindest teilweise durch eine Einlage (40) aus geschäumtem Kunststoff begrenzt ist.

5. Funkgerät nach einem der vorstehenden Ansprüche, **dadurch gekennzeichnet, dass** der Kanal (42) zumindest teilweise durch die Außenwände (11, 12, 13, 15, 17) des Funkgeräts begrenzt ist.

6. Funkgerät nach einem der vorstehenden Ansprüche, **dadurch gekennzeichnet, dass** der Kanal (42) zumindest teilweise durch Papp-, Kunststoff oder Metallstreifen begrenzt ist.

7. Funkgerät nach Anspruch 1, **gekennzeichnet durch** eine Kompensationsschaltung aufweist, die **durch** den Weg **durch** den Kanal (42) entstehende Verzerrungen des Schalls kompensiert.

8. Funkgerät nach einem der vorstehenden Ansprüche, **dadurch gekennzeichnet, dass** es ein CB-Funkgerät ist.

9. Funkgerät nach einem der vorstehenden Ansprüche, **dadurch gekennzeichnet, dass** es zum Einbau in einen Norm-Schacht nach ISO 7736 ausgebildet ist.

10. Funkgerät nach einem der vorstehenden Ansprüche, **dadurch gekennzeichnet, dass** es aus einem Sendeempfänger (16) mit eingebautem Lautsprecher (34) und einem Einbaurahmen (18) gebildet ist.

11. Funkgerät nach Anspruch 10, **dadurch gekennzeichnet, dass** der Sendeempfänger (16) im Einbaurahmen (18) aufgenommen ist und der Kanal (42) im Einbaurahmen (18) gebildet ist.

12. Funkgerät nach Anspruch 10 oder 11, **dadurch gekennzeichnet, dass** sich die Schallauftrittsöffnung im Einbaurahmen befindet, der Kanal in einer Einlage (40) im Einbaurahmen (18) gebildet ist, der Kanal (42) hinter der Schallauftrittsöffnung eine keilförmige, sich von der Öffnung weg verjüngende Gestalt hat und in dem Teil, der dem Lautsprecher (34) des Sendeempfängers benachbart ist, sowie dem Teil zwischen diesen beiden Abschnitten einen rechteckigen Querschnitt aufweist und in seinem dem Sendeempfänger (16) benachbarten Teil etwa die Ausdehnung des Lautsprecher (34) hat.

13. Funkgerät nach Anspruch 10, 11 oder 12, **dadurch gekennzeichnet, dass** der Kanal sich von dem Teil, der dem Lautsprecher (34) des Sendeempfängers benachbart ist, zu der Stelle, in der er eine keilförmige Gestalt hat, verjüngt.

14. Funkgerät nach Anspruch 10, 11, 12 oder 13, **dadurch gekennzeichnet, dass** die Höhe des Kanals dem Abstand zwischen der Unterseite des Sendeempfängers (16) und der Unterwand (11) des Einbaurahmens (18) entspricht.

15. Funkgerät nach Anspruch 10, 11, 12 oder 13, **dadurch gekennzeichnet, dass** die Höhe des Kanals dem Abstand zwischen der Oberseite des Sendeempfängers (16) und der Oberwand (13) des Einbaurahmens (18) entspricht.

## Claims

1. A radio set for horizontal installation in a standard compartment of a motor vehicle, with a loudspeaker (34) which is built into the radio set and the opening of which extends parallel to the upper or lower surface of the radio set, and with a front plate (12) on which controls (22, 24, 26, 28) are arranged and which has a sound outlet opening, **characterised in that** a duct (42) is formed inside the radio set for the conduction of sound from the loudspeaker (34) to the front (12) of the radio set (10) and, at least in its part adjacent to the loudspeaker (34), extends parallel to the upper or lower surface of the radio set and ends in the sound outlet opening.

2. A radio set according to claim 1, **characterised in that** the duct (42) at least partly extends in the space between the loudspeaker (34) and the lower wall or the upper wall of the radio set (10).

3. A radio set according to claim 2, **characterised in that** the duct (42) has a wedge-shaped formation behind the sound outlet opening and has a rectangular cross-section in its part adjacent to the loudspeaker (34) and in the part between these two portions and, in its part adjacent to the loudspeaker (34), has approximately the extent of the loudspeaker (34).

4. A radio set according to any one of the preceding claims, **characterised in that** the duct (42) is at least partly bounded by an insert (40) of foamed plastic.

5. A radio set according to any one of the preceding claims, **characterised in that** the duct (42) is at least partly bounded by the outer walls (11, 12, 13, 15, 17) of the radio set.

6. A radio set according to any one of the preceding claims, **characterised in that** the duct (42) is at least partly bounded by cardboard, plastic or metal strips.

7. A radio set according to claim 1, **characterised by** a compensating circuit which compensates for sound distortions arising along the path through the duct (42).

8. A radio set according to any one of the preceding claims, **characterised in that** it is a CB radio set.

9. A radio set according to any one of the preceding claims, **characterised in that** it is formed for installation in a standard compartment according to ISO 7736.

10. A radio set according to any one of the preceding claims, **characterised in that** it is formed from a transmitter-receiver (16) with a built-in loudspeaker (34) and a mounting frame (18).

11. A radio set according to claim 10, **characterised in that** the transmitter-receiver (16) is held in the mounting frame (18) and the duct (42) is formed in the mounting frame (18).

12. A radio set according to claim 10 or 11, **characterised in that** the sound outlet opening is located in the mounting frame, the duct is formed in an insert (40) in the mounting frame (18), the duct (42) has, behind the sound outlet opening, a wedge-shaped formation tapering away from the opening and has a rectangular cross-section in the part adjacent to the loudspeaker (34) of the transmitter-receiver and in the part between these two portions and, in its part adjacent to the transmitter-receiver (16), has approximately the extent of the loudspeaker (34).

13. A radio set according to claim 10, 11 or 12, **characterised in that** the duct tapers from the part adjacent to the loudspeaker (34) of the transmitter-receiver to the point at which it has a wedge-shaped formation.

14. A radio set according to claim 10, 11, 12 or 13, **characterised in that** the height of the duct corresponds to the distance between the lower surface of the transmitter-receiver (16) and the lower wall (11) of the mounting frame (18).

15. A radio set according to claim 10, 11, 12 or 13, **characterised in that** the height of the duct corresponds to the distance between the upper surface of the transmitter-receiver (16) and the upper wall (13) of the mounting frame (18).

## Revendications

1. Appareil radio pour un montage horizontal dans un orifice normalisé de véhicules, comportant un haut-parleur (34) inséré dans l'appareil radio, dont l'ouverture s'étend parallèlement au côté supérieur ou inférieur de l'appareil radio et comportant une plaque antérieure (12), sur laquelle sont disposés les éléments de commande (22, 24, 26, 28) et qui présente un sortie de source sonore, **caractérisé en ce que,** à l'intérieur de l'appareil radio, un canal (42) est réalisé pour la ligne sonore allant du haut-parleur (34) au côté antérieur (12) de l'appareil radio (10), qui s'étend au moins dans sa partie adjacente au haut-parleur (34) parallèle au côté supérieur ou inférieur de l'appareil radio et se termine dans le sortie de source sonore.

2. Appareil radio selon la revendication 1, **caractérisé en ce que** le canal (42) s'étend au moins partiellement dans l'espace entre le haut-parleur (34) et la paroi inférieure ou la paroi supérieure de l'appareil radio (10).

3. Appareil radio selon la revendication 2, **caractérisé en ce que** le canal (42) présente, derrière le sortie de source sonore, une forme en coin et présente dans sa partie adjacente au haut-parleur (34) et la partie entre ses deux tronçons une coupe transversale parallélépipédique et présente dans sa partie adjacente au haut-parleur (34) la dimension du haut-parleur (34).

4. Appareil radio selon l'une des revendications précédentes, **caractérisé en ce que** le canal (42) est limité au moins partiellement par une garniture (40) en matériau expansé.

5. Appareil radio selon l'une des revendications précédentes, **caractérisé en ce que** le canal (42) est limité partiellement par les parois extérieures (11, 12, 13, 15, 17) de l'appareil radio.

6. Appareil radio selon l'une des revendications précédentes, **caractérisé en ce que** le canal (42) est limité au moins partiellement par des bandes de papier, de plastique ou de métal.

7. Appareil radio selon la revendication 1, **caractérisé par** un circuit de compensation, qui compense les distorsions du son apparaissant dans le trajet à travers le canal (42).

8. Appareil radio selon l'une des revendications précédentes, **caractérisé en ce qu'**il s'agit d'une radio CB.

9. Appareil radio selon l'une des revendications précédentes, **caractérisé en ce qu'**il est réalisé pour une insertion dans un orifice normalisé selon la norme ISO 7736.

10. Appareil radio selon l'une des revendications précédentes, **caractérisé en ce qu'**il est réalisé par un émetteur récepteur (16) comportant un haut-parleur intégré (34) et un cadre de montage (18).

11. Appareil radio selon la revendication 10, **caractérisé en ce que** l'émetteur récepteur (16) est reçu dans le cadre de montage (18) et le canal (42) est formé dans le cadre de montage (18).

12. Appareil radio selon la revendication 10 ou 11, **caractérisé en ce que** le sortie de source sonore se trouve dans le cadre de montage, le canal est réalisé dans un garniture (40) dans le cadre de montage (18), le canal (42) présente, derrière le sortie de source sonore, une forme en coin se rétrécissant depuis l'ouverture et présente dans une partie, qui est adjacente au haut-parleur (34) de l'émetteur récepteur, ainsi qu'une partie entre ses deux tronçons, une coupe transversale parallélépipédique et présente la dimension du haut-parleur (34) dans sa partie adjacente à l'émetteur récepteur (16).

13. Appareil radio selon la revendication 10, 11 ou 12, **caractérisé en ce que** le canal se rétrécit à partir de la partie, qui est adjacente au haut-parleur (34) de l'émetteur récepteur, jusqu'à l'endroit où il présente une forme en coin.

14. Appareil radio selon la revendication 10, 11, 12 ou 13, **caractérisé en ce que** la hauteur du canal correspond à la distance entre le côté inférieur de l'émetteur récepteur (16) et la paroi inférieure (11) du cadre de montage (18).

15. Appareil radio selon la revendication 10, 11, 12 ou 13, **caractérisé en ce que** la hauteur du canal correspond à la distance entre le côté supérieur de l'émetteur récepteur (16) et la paroi supérieure (13) du cadre de montage (18).
